# EUROPEAN PATENT SPECIFICATION

(11) **EP 1 347 225 B1**
(45) Date of publication and mention of the grant of the patent: **01.06.2005**
(21) Application number: 03006389.5
(22) Date of filing: 20.03.2003
(51) Int. Cl.: F16K 31/524, F16K 31/56

(54) **Fluid control device**
Fluidsteuervorrichtung
Dispositif de commande de fluide

(30) Priority: 21.03.2002 GB 0206687
(43) Date of publication of application: 24.09.2003
(73) Proprietor: Actaris UK, Limited, Manchester M1 4EU (GB)
(72) Inventor: Bond, William, Felixstowe, Suffolk IP11 9HJ (GB); Dickerson, Adrian, Felixstowe, Suffolk IP11 2UJ (GB); Livingstone, Jim, Prestbury, Macclesfield SK10 4DD (GB)
(74) Representative: Lenne, Laurence

(56) References cited:
- DE-C- 962 877
- FR-A- 1 335 138
- US-A- 3 685 792
- US-A- 5 873 335

## Description

The present invention relates to a fluid control device and a conversion kit for converting a fluid control device.

Fluid control devices, such as gas and water meters, are used extensively in industrial and domestic situations for controlling and metering fluid flows.

A conventional prepayment gas meter has, for example: a measuring device for measuring gas flow along a gas line; a valve for controlling the flow of gas along the line; a cam and cam follower arrangement for opening and closing the valve; a drive mechanism for driving the cam and thereby operating the valve; and a processor/controller which controls the valve (via the drive mechanism and the cam and cam follower arrangement) in response to the measured gas flow and/or the credit status of the consumer of the gas.

For example, the valve can be closed if the processor/controller determines that the consumer of the gas has run out of credit or that a dangerous gas supply situation has occurred. The valve can also be opened if the processor/controller determines that credit has been restored so that the gas supply can be reconnected.

Typically the cam surface of the cam is shaped such that one valve transition (usually from the open to the closed position) occurs effectively instantaneously, which prevents the valve from stopping at a half open position. However, the cam surface then generally effects the other transition (usually from the closed to the open position) in a gradual manner. In this case, if a power failure interrupts the transition there is a risk that the valve may stop at a part open position. This can be dangerous if, as a result, the capacity to supply gas is lowered.

For example, it may not be noticed that the meter has malfunctioned because the lowered capacity may be sufficient to allow a low gas consumption appliance (such as a gas cooker burner) to operate. However, when another appliance switches on the low gas consumption appliance may be starved of supply. Were this to cause the flame at the low gas consumption appliance to go out, an explosive situation could arise with uncombusted gas able to exit from the low gas consumption appliance.

Therefore, it is desirable to ensure that the transition from a closed to an open valve position (or vice versa) is completed, even if e.g. a power failure occurs during the transition.

US patent 3,685,792 describes a snap action valve actuator comprising two loaded springs which on unloading moves the cam and thereby shifts the valve to the closed or open position. The cam system with the first loaded spring provides a "snap-shut" action for the valve and the cam system with the second loaded spring provides a corresponding "snap-open" action.

In view of the above, a first aspect of the present invention provides a fluid control device comprising:
a valve for controlling the flow of fluid along a fluid line,
a cam operatively connected to the valve, the cam being drivable to shift the valve between a closed position and an open position,
a drive mechanism for driving the cam, a pre-load system which on unloading moves the cam and thereby shifts the valve to the closed or open position (preferably to the open position) and a detector system to detect if the pre-load is malfunctioning. By "open position" we mean either the fully open position of the valve, or a safe open position system which may be somewhat less than fully open but nonetheless allows the fluid control device to operate safely. Preferably the open position is the fully open position.

Thus the pre-load system can ensure that the valve arrives at the closed or open position even if the drive mechanism is arrested at a position corresponding to an incomplete valve transition.

The pre-load system also provides redundancy, so that if either the drive mechanism or pre-load system fails the other can still complete the transition.

Furthermore the pre-load system does not move the valve independently of the cam. Thus, registration between the cam and valve positions can be maintained.

Preferably the pre-load system moves the cam with a snap action.

Preferably, the device is adapted so that the valve remains in the other of the closed or open position as the pre-load system is loaded. Thus if both the pre-load system and the drive mechanism fail as the pre-load system is being loaded, the valve can be maintained in its initial position so that partial valve opening can be prevented. More preferably, the cam is shaped so that the valve remains in the other of the closed or open position as the pre-load system is loaded. Alternatively, however, means may be provided to detain, check or otherwise operatively disconnect the cam from the drive mechanism as the pre-system is loaded so that the valve remains in said other position.

In one embodiment, the pre-load system is loaded by the drive mechanism. This can reduce the complexity of the device and provide a simple means for ensuring that the pre-load system is loaded at the appropriate time relative to the valve position.

The pre-load system may comprise a resilient member, such as a spring. Such a system can be simple and reliable in operation. The drive mechanism may comprise a motor such as a stepper motor. A gear train may transmit the drive from the motor to the cam. Alternatively the motor may drive the cam directly.

The device may further comprise a detector system to detect if the pre-load system is malfunctioning.

Preferably, the valve is for controlling the flow of gas along a gas line (which may be the gas line of a gas meter).

A further aspect of the invention provides a gas meter (preferably a prepayment gas meter) comprising the fluid control device of the previous aspect.

Further aspects of the invention relate to conversion kits for converting fluid control devices.

For example, one aspect provides a conversion kit for converting a fluid control device, the device comprising a valve for controlling the flow of fluid along a fluid line, and a cam operatively connected to the valve, the cam being drivable to shift the valve between a closed position and an open position,
wherein the conversion kit comprises:
a drive mechanism for driving the cam, and
a pre-load system which on unloading moves the cam and thereby shifts the valve to the closed or open position.

Another aspect provides a conversion kit for converting a fluid control device, the device comprising a valve for controlling the flow of fluid along a fluid line,
wherein the conversion kit comprises:
a cam which is operatively connectable to the valve, and is drivable to shift the valve between a closed position and an open position,
a drive mechanism for driving the cam, and
a pre-load system which on unloading moves the cam and thereby shifts the valve to the closed or open position.

Thus the conversion kit of either of the previous aspects can be retrofitted to an existing fluid control device to convert it into a fluid control device according to the first aspect of the invention.

Any one or combination of the optional features of the first aspect of the invention is/are also applicable to the conversion kit of either of the previous aspects.

A specific embodiment of the present invention is now described in detail with reference to the following figures in which:
Fig. 1 shows schematically a cam and cam follower for opening and closing a valve which controls the gas flow along a gas line,
Fig. 2 shows schematically a side view of a drive mechanism and a dog drive for driving the cam of Fig. 1,
Figs. 3a to c show successive plan views of the gear train of the drive mechanism of Fig. 2, and
Fig. 4a and b show respective plan views of dog wheels of the dog drive of Fig. 2.

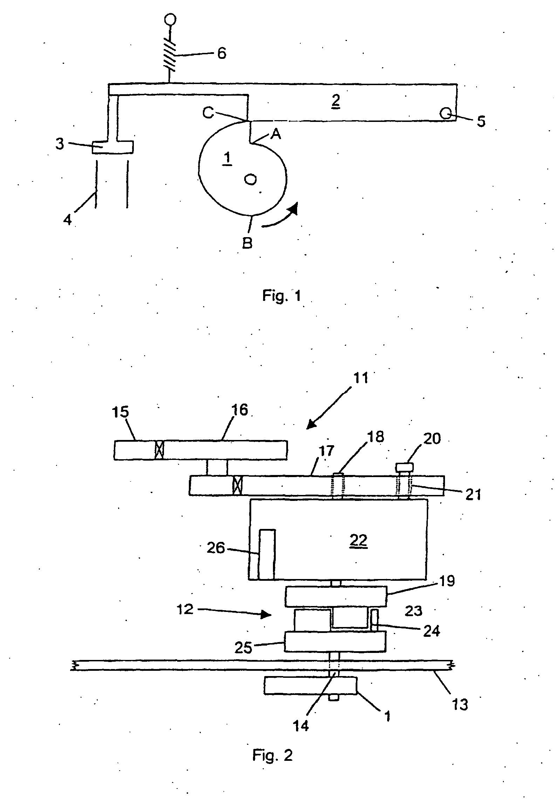

Fig. 1 shows schematically a cam 1 and cam follower 2 which open and close a valve 3 for controlling gas flow along a gas line 4 of a prepayment gas meter. The gas meter also has a gas flow measuring device (not shown), and a processor/controller (also not shown) which determines when to open and close the valve.

The direction of rotation of cam 1 is indicated by the arrow. The radius of the cam surface profile is constant from point A to B, and then increases gradually to point C whereupon it drops back to point A. Cam follower 2, which pivots about point 5, is urged against the cam surface by spring 6, such that valve 3, which is connected to the cam follower, moves in response to the rotation of the cam (in another embodiment, which is not shown, the valve rests directly against the cam and a cam follower is not used).

When the cam follower touches at point C (as shown in Fig. 1) the valve is open and gas can flow along gas line 4. Point C may incorporate a "flat" to allow for gas meter parts variability and avoid the need for precise positioning to obtain a fully open valve. When the cam rotates slightly beyond C the spring pushes the cam follower down to point A and the valve is closed. Thus the cam provides a "snap-shut" action for the valve.

However, the gradual increase in the radius of the cam surface profile from point B onwards does not provide a corresponding "snap-open" action. Indeed, the profile may be arranged to match the rate of rise of the cam to the applied torque another desirable characteristic. Thus, the cam profile alone cannot prevent the valve being caught in a potentially dangerous part-open position if the cam is arrested (e.g. due to a power failure).

Fig. 2 shows schematically a side view of a drive mechanism and a dog drive 12 for driving cam 1 (cam follower 2 and valve 3 are not shown in Fig. 2). The drive mechanism comprises a stepper motor (not shown) and a gear train 11 which drive the dog drive. The stepper motor is under the control of the processor/controller. The cam, the cam follower and the valve are enclosed in a gas tight container, a portion of the container wall 13 being shown in Fig. 2. A drive shaft 14 penetrates the wall in a gas tight manner to transmit rotation from the dog drive to the cam. An advantage of using the dog drive to transmit rotation to the cam is that such drives tolerate imprecise alignments, thereby facilitating the connection of the drive mechanism to the components inside the gas tight container.

Gear train 11 consists of motor gear 15 (powered by the stepper motor), which drives sequentially first and second transmission gears 16, 17. The second transmission gear is coaxial with, but freely rotatable on, drive shaft 18 of a dog wheel 19 which forms one half of dog drive 12.

Rotational motion is transmitted from second transmission gear 17 to dog wheel 19 via a pin and slot arrangement. Pin 20 extends through arcuate slot 21 in the second transmission gear, so that as the second transmission gear rotates the pin is pushed forward by the end of the slot. The pin is joined to sensor skirt 22, which in turn is fixed to drive shaft 18, so that the pin and the dog wheel rotate together about the axis of drive shaft 18 as the second transmission gear turns. The functioning of the pin and slot arrangement is described in more detail below.

Dog tooth 23 extends from the side of dog wheel 19 and fits into niche 24 in dog wheel 25, which sits on drive shaft 14 and forms the other half of dog drive 12. Thus rotation of dog wheel 19 (which is ultimately powered by the stepper motor) causes drive shaft 14 to rotate and hence cam 1.

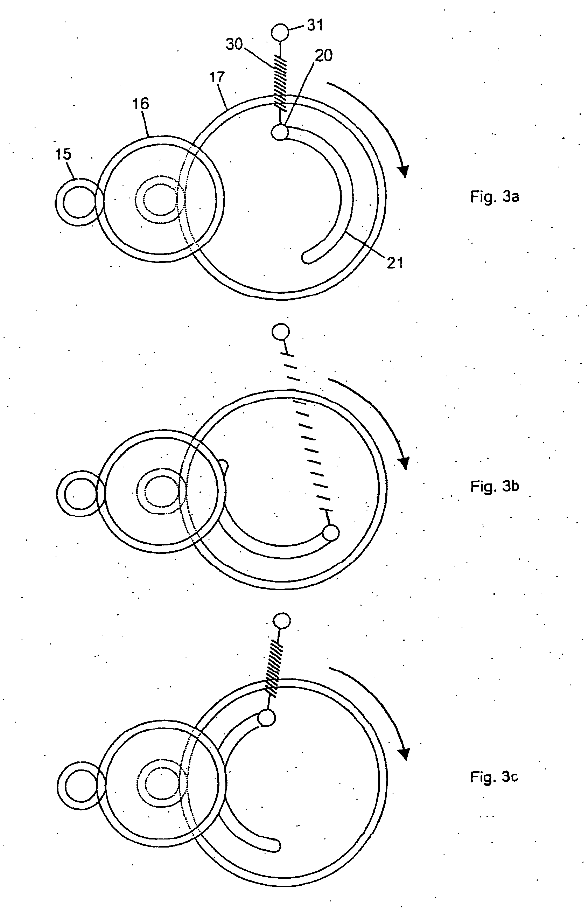

Figs. 3a to c show plan views of gear train 11 at successive rotational positions of second transmission gear 17. The direction of rotation of the second transmission gear is indicated by the arrow.

Fig. 3a shows pin 20 and arcuate slot 21 in second transmission gear 17. The pin is at a rear end (relative to the direction of rotation) of the slot and so is carried around with the second transmission gear as the gear rotates. A spring 30 is connected at one end to the pin and at the other end to a fixed point 31 in the gas meter. By connecting the spring to the pin, as opposed to e.g. dog wheel 19, the spring can extend over the axis of rotation of drive shaft 18 without interfering with the shaft.

As the second transmission gear rotates the spring is loaded (i.e. stretched) as shown in Fig. 3b. Eventually, when the pin reaches a position of maximum distance from fixed point 31, the spring unloads and pulls pin 20 along slot 21 until the spring is unloaded or the pin is arrested by the forward end of the slot, as shown in Fig. 3c. This advances the dog drive and the cam so that point C (or a point near enough to C such that the valve is open a safe amount) on the cam profile engages the cam follower. The valve is opened with a "snap-open" action because the force supplied by spring 30 substantially outweighs forces resisting the opening of the valve, such as spring 6, differential gas pressures acting on the valve, valve sticking etc, and in this way rapidly rotates the engagement position on the cam surface from point B to point C.

The pin is stationary during further rotation of the second transmission gear and slides along the slot until eventually the rear end of the slot reaches the pin. The stepper motor then stops. The gear train has now caught up with the cam and dog drive.

To close the valve again the stepper motor rotates the second transmission gear a small distance forward, moving the pin back to the position shown in Fig. 3a. This also rotates the cam a small distance, and the cam follower is pushed by spring 6 into engagement with point A on the cam surface, thereby closing the valve with a snap action.

Of course, the stepper motor may be stopped at the time when spring 30 unloads. It can then catch up the rear end of the slot with the pin when it is decided to close the valve again, or at any other suitable time. Also the amount of tension experienced by spring 30 in the fully open and closed positions can be adjusted as required.

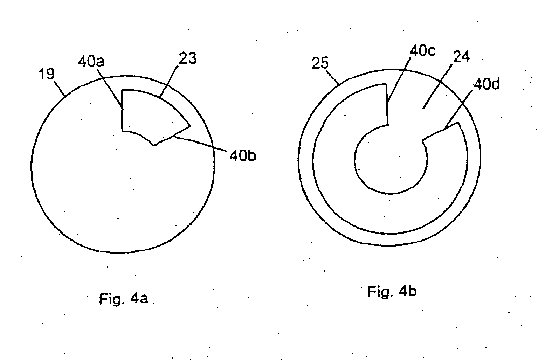

Fig. 4a and b show plan views of dog wheels 19, 25. Conventional dog wheels engage each other via respective paddle-shaped dog teeth, which under certain circumstances can allow the driven dog wheel to advance relative to the driving dog wheel (indeed an alternative to the pin and slot arrangement of the present embodiment, would be to provide such conventional dog wheels and attach spring 30 at one end directly to the driven dog tooth). However, dog tooth 23 and niche 24 on dog wheels 19, 25 correspond in shape so that, in use, the operating faces 40a-d of the tooth and niche are closely spaced. In this way, dog wheel 25 is prevented from advancing relative to dog wheel 19 (e.g. to a position which could cause inadvertent closure of the valve) under the impulse supplied by the unloading of spring 30.

As mentioned previously, the radius of the cam surface profile is constant from point A to B (before increasing gradually to point C), the unloading of spring 30 occurring shortly before or when the cam follower reaches point B on the cam. Clearly, unloading should not initiate after point B is reached. Thus, as the valve does not open as the spring is being loaded, intermediate valve positions are avoided even if a power failure occurs at this time.

Spring 30, pin 20 and slot 21 provide a pre-load system for advancing cam 1 relative to the drive mechanism. However, as the spring is loaded by the drive mechanism a second motor for loading the spring is not required.

Furthermore, the pre-load system and second transmission gear 17 effectively provide alternative means for rotating the cam, which improves the reliability of the meter. For example, were spring 30 to fail as it was being loaded, the second transmission gear 17 would still ultimately carry the pin round to the position shown in Fig. 3c, and thereby open the valve. Alternatively, were the stepper motor to fail during the valve opening procedure, the pre-load system and cam profile would ensure that the valve either remained closed or became fully open.

The meter also has a detector system (not shown) which determines if the pre-load system is functioning correctly. The detector system comprises an optical sensor which determines when the valve is fully open by sensing a suitably positioned slot 26 (shown in Fig. 2) in sensor skirt 22. The detector system further comprises a counter (which may be integrated with the processor/controller) for counting the number of stepper motor advances or steps to open the valve. Starting from the valve closed position (shown in Fig. 3a) of second transmission gear 17, if the pre-load system is functioning correctly, the number of stepper motor advances before the valve opens (as detected by the optical sensor) should correspond to the number required to bring the second transmission gear to about the position shown in Fig. 3b, as thereafter the unloading of the spring and valve opening occur effectively instantaneously. If the pre-load system is malfunctioning, however, the valve will only open when the second transmission gear arrives in the position shown in Fig. 3c. As this requires nearly double the number of stepper motor advances, the counter value indicates if the pre-load system has failed.

Alternatively, the skirt may have a second slot (not shown) which normally passes rapidly by the sensor as spring 30 unloads, but passes slowly (or with a number of stepper motor steps) in the event the spring has failed. This arrangement (or any other direct or indirect arrangement for measuring the time for the valve to open) may be used if a motor other than a stepper motor is used to power motor gear 15.

Alternatively or additionally, a further check on pre-load system functioning can be made by briefly de-energising or reversing the stepper motor after partially loading spring 30. Dog wheel 19 and skirt 22 will then reverse direction as the spring contracts and this motion can be picked up by the (or another) optical sensor.

The drive mechanism and a dog drive 12 shown in Fig. 2 may be supplied as a conversion kit for retrofitting to cam drive shaft 14 protruding from the gas tight container of an existing meter of the type described above. The gas tight containers of some gas meters, however, may not house the cam and cam follower, in which case the conversion kit may comprise these components as well.

## Claims

1. Fluid control device comprising:
a valve for controlling the flow of fluid along a fluid line,
a cam operatively connected to the valve, the cam being drivable to shift the valve between a closed position and an open position,
a drive mechanism for driving the cam, a pre-load system which on unloading moves the cam and thereby shifts the valve to the closed or open position, **characterized in that** said fluid control device further comprises
a detector system to detect if the pre-load system is malfunctioning.

2. Fluid control device according to claim 1, wherein the pre-load system moves the cam with a snap action.

3. Fluid control device according to claims 1 or 2, wherein the device is adapted so that the valve remains in the other of said closed or open position as the pre-load system is loaded.

4. Fluid control device according to any one of claims 1 to 3, wherein the cam is shaped so that the valve remains in the other of said closed or open position as the pre-load system is loaded.

5. Fluid control device according to any one of the previous claims, wherein the pre-load system is loaded by the drive mechanism.

6. Fluid control device according to any one of the previous claims, wherein the pre-load system comprises a resilient member.

7. Fluid control device according to any one of the previous claims, wherein the drive mechanism comprises a stepper motor.

8. Fluid control device according to any one of the previous claims, wherein the valve is for controlling the flow of gas along a gas line.

9. A gas meter comprising the fluid control device of claim 8.

10. Conversion kit for converting a fluid control device, the device comprising a valve for controlling the flow of fluid along a fluid line, and a cam operatively connected to the valve, the cam being drivable to shift the valve between a closed position and an open position,
wherein the conversion kit comprises:
a drive mechanism for driving the cam,
**characterized in that** said conversion kit comprises
a pre-load system which on unloading moves the cam and thereby shifts the valve to the closed or open position, and
a detector system to detect if the pre-load system is malfunctioning.

11. Conversion kit for converting a fluid control device, the device comprising a valve for controlling the flow of fluid along a fluid line,
wherein the conversion kit comprises:
a cam which is operatively connectable to the valve, and is drivable to shift the valve between a closed position and an open position,
a drive mechanism for driving the cam,
**characterized in that** said conversion kit comprises
a pre-load system which on unloading moves the cam and thereby shifts the valve to the closed or open positionand
a detector system to detect if the pre-load system is malfunctioning.

## Patentansprüche

1. Fluidsteuereinrichtung mit:
einem Ventil zum Steuern der Fluidströmung entlang einer Fluidleitung,
einem mit dem Ventil funktionsmäßig gekoppelten Nockenelement, welches so antreibbar ist, dass es das Ventil zwischen einer geschlossenen Position und einer offenen Position umschaltet,
einem Antriebmechanismus zum Antreiben des Nockenelements,
einem Vorlastsystem, das beim Entlasten das Nockenelement bewegt und dadurch das Ventil in die geschlossene oder offene Position umschaltet,
**dadurch gekennzeichnet, dass** die Fluidsteuereinrichtung ferner ein Detektorsystem zum Erfassen, ob das Vorlastsystem eine Funktionsstörung hat, aufweist.

2. Fluidsteuereinrichtung nach Anspruch1, bei der das Vorlastsystem das Nockenelement mit einer Schnappwirkung bewegt.

3. Fluidsteuereinrichtung nach Anspruch 1 oder 2, die so ausgelegt ist, dass das Ventil in der jeweils anderen der geschlossenen und der offenen Position bleibt, wenn das Vorlastsystem belastet wird.

4. Fluidsteuereinrichtung nach einem der Ansprüche 1-3, bei der das Nockenelement so geformt ist, dass das Ventil in der jeweils anderen der geschlossenen und der offenen Position bleibt, wenn das Vorlastsystem belastet wird.

5. Fluidsteuereinrichtung nach einem der vorstehenden Ansprüche, bei der das Vorlastsystem durch den Antriebsmechanismus belastet wird.

6. Fluidsteuereinrichtung nach einem der vorstehenden Ansprüche, bei der das Vorlastsystem ein elastisches Element aufweist.

7. Fluidsteuereinrichtung nach einem der vorstehenden Ansprüche, bei der der Antriebsmechanismus ein Schrittmotor aufweist.

8. Fluidsteuereinrichtung nach einem der vorstehenden Ansprüche, bei der das Ventil zum Steuern der Gasströmung entlang einer Gasleitung dient.

9. Gasmessgerät, das die Fluidsteuereinrichtung nach Anspruch 8 aufweist.

10. Umbausatz zum Umbauen einer Fluidsteuereinrichtung, welche ein Ventil zum Steuern der Fluidströmungen entlang einer Fluidleitung und ein funktionsmäßig mit dem Ventil gekoppeltes Nockenelement aufweist, welches zum Umschalten des Ventils zwischen einer geschlossenen Position und einer offenen Position antreibbar ist,
wobei der Umbausatz aufweist:
einen Antriebsmechanismus zum Antreiben des Nockenelements,
ein Vorlastsystem, das beim Entlasten das Nockenelement bewegt und dadurch das Ventil in die geschlossene oder offene Position umschaltet,
**dadurch gekennzeichnet, dass** der Umbausatz ferner ein Detektorsystem zum Erfassen, ob das Vorlastsystem eine Funktionsstörung hat, aufweist.

11. Umbausatz zum Umbauen einer Fluidsteuereinrichtung, welche ein Ventil zum Steuern der Fluidströmung entlang einer Fluidleitung aufweist,
wobei der Umbausatz aufweist:
ein Nockenelement, das funktionsmäßig mit dem Ventil gekoppelt ist und zum Umschalten des Ventils zwischen einer geschlossenen Position und einer offenen Position antreibbar ist,
einen Antriebsmechanismus zum Antreiben des Nockenelements,
ein Vorlastsystem, das beim Entlasten das Nockenelement bewegt und dadurch das Ventil in die geschlossene oder offene Position umschaltet,
**dadurch gekennzeichnet, dass** der Umbausatz ferner ein Detektorsystem zum Erfassen, ob das Vorlastsystem eine Funktionsstörung hat, aufweist.

## Revendications

1. Dispositif de commande de fluide comprenant :
une vanne pour commander l'écoulement de fluide le long d'une conduite de fluide,
une came reliée de manière fonctionnelle à la vanne, la came pouvant être entraînée pour déplacer la vanne entre une position fermée et une position ouverte,
un mécanisme d'entraînement pour entraîner la came,
un système de pré-charge qui, lors d'un retrait de charge, déplace la came et, de ce fait, déplace la vanne à la position fermée ou ouverte, **caractérisé en ce que** ledit dispositif de commande de fluide comprend en outre :
un système de détection pour détecter si le système de pré-charge est défaillant.

2. Dispositif de commande de fluide selon la revendication 1, dans lequel le système de pré-charge déplace la came par une action rapide.

3. Dispositif de commande de fluide selon les revendications 1 ou 2, dans lequel le dispositif est adapté de sorte que la vanne reste dans l'autre de ladite position fermée ou ouverte alors que le système de pré-charge est chargé.

4. Dispositif de commande de fluide selon l'une quelconque des revendications 1 à 3, dans lequel la came est formée de sorte que la vanne reste dans l'autre de ladite position fermée ou ouverte alors que le système de pré-charge est chargé.

5. Dispositif de commande de fluide selon l'une quelconque des revendications précédentes, dans lequel le système de pré-charge est chargé par le mécanisme d'entraînement.

6. Dispositif de commande de fluide selon l'une quelconque des revendications précédentes, dans lequel le système de pré-charge comprend un élément élastique.

7. Dispositif de commande de fluide selon l'une quelconque des revendications précédentes, dans lequel le mécanisme d'entraînement comprend un moteur pas à pas.

8. Dispositif de commande de fluide selon l'une quelconque des revendications précédentes, dans lequel la vanne sert à la commande de l'écoulement de gaz le long d'une conduite de gaz.

9. Compteur à gaz comprenant le dispositif de commande de fluide selon la revendication 8.

10. Ensemble de conversion pour convertir un dispositif de commande de fluide, le dispositif comprenant une vanne pour commander l'écoulement de fluide le long d'une conduite de fluide et une came reliée de manière opérationnelle à la vanne, la came pouvant être entraînée pour déplacer la vanne entre une position fermée et une position ouverte,
dans lequel l'ensemble de conversion comprend :
un mécanisme d'entraînement pour entraîner la came,
**caractérisé en ce que** ledit ensemble de conversion comprend en outre :
un système de pré-charge qui, lors d'un retrait de charge, déplace la came et, de ce fait, déplace la vanne à la position fermée ou ouverte, un système de détection pour détecter si le système de pré-charge est défaillant.

11. Ensemble de conversion pour convertir un dispositif de commande de fluide, le dispositif comprenant une vanne pour commander l'écoulement de fluide le long d'une conduite de fluide,
dans lequel l'ensemble de conversion comprend :
une came qui peut être reliée de manière opérationnelle à la vanne et qui peut être entraînée pour déplacer la vanne entre une position fermée et une position ouverte,
un mécanisme d'entraînement pour entraîner la came,
**caractérisé en ce que** ledit ensemble de conversion comprend en outre :
un système de pré-charge qui, lors d'un retrait de charge, déplace la came et, de ce fait, déplace la vanne à la position fermée ou ouverte, un système de détection pour détecter si le système de pré-charge est défaillant.
